(19)
Europäisches
Patentamt
European
Patent Office
Office européen
des brevets

(11) **EP 2 409 905 B1**

(12) **EUROPEAN PATENT SPECIFICATION**

(45) Date of publication and mention
of the grant of the patent:
**22.10.2014 Bulletin 2014/43**

(51) Int Cl.:
***B62K 1/00*** *(2006.01)*

(21) Application number: **10170675.2**

(22) Date of filing: **23.07.2010**

(54) **Powered unicycle**

Angetriebenes Einrad

Monocycle à moteur

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(43) Date of publication of application:
**25.01.2012 Bulletin 2012/04**

(73) Proprietor: **Verduron, Christian
71420 Genelard (FR)**

(72) Inventor: **Verduron, Christian
71420 Genelard (FR)**

(74) Representative: **Thivillier, Patrick et al
Cabinet Laurent & Charras
3 Place de l'Hôtel de Ville
B.P. 203
42005 Saint-Etienne Cedex 1 (FR)**

(56) References cited:
**WO-A1-2009/120157      DE-A1- 4 112 447
GB-A- 2 409 843      US-A- 3 399 742
US-A1- 2001 032 743**

**Description**

**FIELD OF THE INVENTION**

The present invention relates to vehicles and methods for transporting individuals, and more particularly to a powered one wheel vehicle such as a unicycle for example.

**BACKGROUND OF THE INVENTION**

Unicycles have been known for a long time. Said unicycles are usually pedal operated and comprise a seat upon which a rider may sit and operate pedals directly coupled to the wheel to propel the unicycle.

The main characteristic of unicycles lies in that the contact between the riding surface and the wheel of a unicycle is essentially single-point. Consequently, riders of unicycles must maintain stability by managing both their lateral balance and fore-aft balance.

Fore-aft balance on a pedal-operated unicycle is managed by speeding the wheel up or slowing the wheel down in order to maintain the wheel point-of-contact under the center of mass of the rider.

Steering of the unicycle is typically accomplished by body twisting which involves the rider applying a steering couple to the wheel in the desired direction via their feet on the pedals and rotating their upper body in the opposite direction in order to react the steering couple with a reacting moment R.

Riding such unicycle is straining and tiresome, yet the velocity achieved is low.

Therefore, unicycles with a motor drive (electromotor or internal combustion engine) and a corresponding control system were developed, said control system being intended to balance the unicycle in the riding direction.

The US patent US 3,399,742 discloses such unicycle. Said unicycle comprises a motor drive, a gyroscope serving to generate an electrical signal proportional to the decline of the unicycle's axis from the vertical, and a corresponding electronic control circuit that receives an electric signal from the gyroscope thus controlling the torque or the speed of the motor drive respectively. A user of the unicycle accelerates the vehicle by leaning his body forward. By leaning the body backwards the speed of the unicycle decreases.

This kind of monocycle presents the drawback to be hard to handle, the steering of the unicycle being accomplished by body twisting of the rider.

Moreover, powered unicycles, propelled by a motor coupled to the wheel, have been also proposed in US patent US2007/0158117. The powered unicycle has a wheel driven by a motor and a control system arranged to automatically maintain the fore-aft balance of the unicycle via operation of the motor. The unicycle also includes a handle bar, coupled to the wheel by a pillar, which is operable to steer the wheel, and a rider-support which is pivotable relative to the wheel.

We also know the international patent application WO 2009/120157 which discloses a unicycle comprising a lower part of the unicycle, which further comprises a wheel with a drive means and a fork, in the branched end of which said wheel is rotatably mounted, and an upper part of the unicycle, which further comprises a seat and a support frame. The lower part and the upper part are connected by means of a rotational connection, enabling the rotational movement of the upper part of the unicycle relative to the lower part.

This kind of powered unicycle has a low range and is expensive to produce. Moreover, this kind of powered unicycle is self-balancing only in the forwards-backwards direction and still need a human being to balance them from side to side.

Therefore, a need exists for a powered unicycle easy to handle, having a large range and a low production cost.

**SUMMARY OF THE INVENTION**

The present invention provides a powered one wheel vehicle according to claim 1.

Other features and advantages of the invention will become apparent to those skilled in the art during the description which will follow, given by way of a non-limiting example, with reference to the appended drawings.

**BRIEF DESCRIPTION OF THE DRAWINGS**

Fig. 1 is a schematic perspective view of a powered one wheel vehicle according to the invention with a rider;
Fig. 2 is a schematic right view of the powered one wheel vehicle according to the invention;
Fig. 3 is a schematic front view of the powered one wheel vehicle according to the invention;
Fig. 4 is a schematic representation of the regulation process of the motor's speed of the powered one wheel vehicle according to the invention;

Fig. 5 is a schematic representation of the geometric correction of the gyroscopic sensors of the powered one wheel vehicle according to the invention;

Fig. 6 is a front view of the fork, the wheel and footboards of the powered one wheel vehicle according to the invention;

Fig. 7 is a perspective view of the fork, the wheel and footboards of the powered one wheel vehicle according to the invention, in a parked position;

Fig. 8 is an elevation view of the wheel of the powered one wheel vehicle according to the invention;

Fig. 9 is an elevation view of another embodiment of the two saucer-shaped wall members of the wheel of the powered one wheel vehicle according to the invention;

Fig. 10 is a perspective view of the motorization of the wheel of the powered one wheel vehicle according to the invention;

Fig. 11 is an another perspective view of the motorization of the wheel of the powered one wheel vehicle according to the invention;

Fig. 12 is schematic elevation view of the motorization of the wheel of the powered one wheel vehicle according to the invention;

Fig. 13 is a schematic front view of a first embodiment of the motorization of the wheel of the powered one wheel vehicle according to the invention;

Fig. 14 is a schematic front view of a second embodiment of the motorization of the wheel of the powered one wheel vehicle according to the invention;

Fig. 15 is an elevation view of another embodiment of the wheel of the powered one wheel vehicle according to the invention, including an annular motor;

Fig. 16 is a schematic perspective view of another embodiment of a powered one wheel vehicle according to the invention with a rider;

## DETAILED DESCRIPTION OF EMBODIMENTS

In the various figures, the same references are used to designate identical or similar elements.

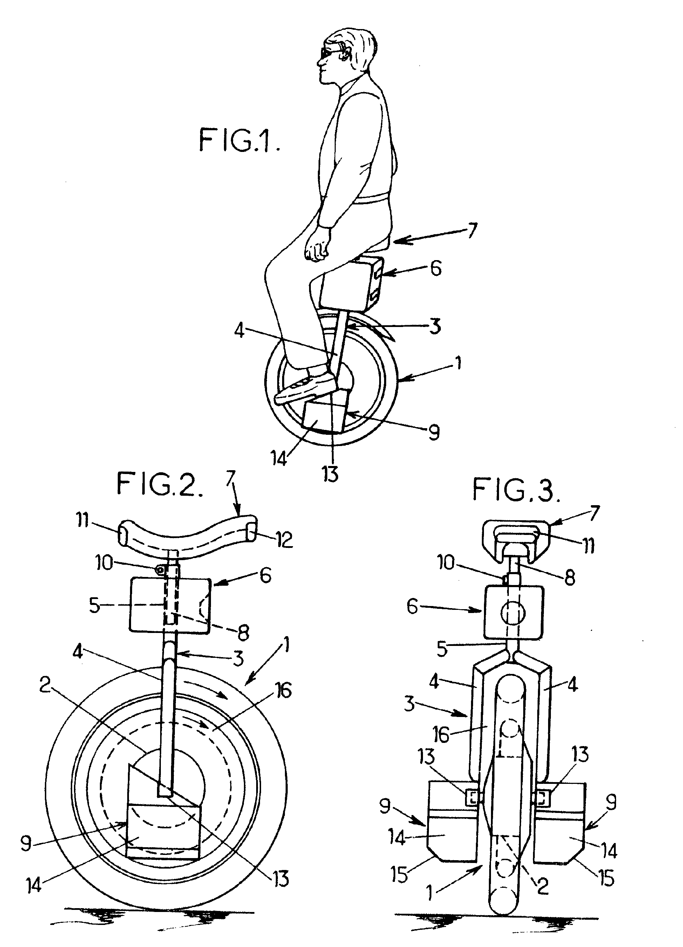

Referring to figures 1 to 3, the powered one wheel vehicle according to the invention is of the kind of unicycle and includes a wheel 1 driven by at least one motor 2 and mounted on a fork 3 including two fork legs 4 and one fork shaft 5, a control unit 6 arranged to automatically maintain the fore-aft balance of the unicycle by piloting the motor 2, a saddle 7 including a saddle tube 8 clamped into the fork shaft 5, and footboards 9 fixed to the fork legs 4 of the fork 3. The saddle tube 8 is clamped into the fork shaft 5 by a quick clamp 10 well known by the man skilled in the art.

It is obvious that the saddle tube 8 can be clamped into the fork shaft 5 by any clamping device well known by the man skilled in the art without departing from the scope of the invention.

The fork shaft 5 receives the control unit 6 extending under the saddle 7 and comprising at least one gyroscopic sensor measuring the angular velocity of the fork, the position's regulation and the speed's regulation of the fork, a variable speed drive of the motor and a control circuitry of accessories and of the motor of the wheel. In this particular embodiment, the control unit 6 comprises two gyroscopic sensors wherein the axes of said gyroscopic sensors are perpendicular.

Preferably, the control circuitry consists in a programmable microcontroller which is positioned into the footboards, upon batteries.

Said accessories include a head light 11 and/or a taillight 12 and/or a horn and/or a loading plug and/or an on-off switch, the horn, the loading plug and the on-off switch being not shown on figures 1 to 3. The saddle 7 which is a narrow saddle usually used in pedal operated unicycle receives in its front part the head light 11 and in its back part the taillight 12.

It is obvious that the head light 11 and the taillight 12 could be positioned respectively onto the front part and the back part of the control unit 6, and/or onto the fork shaft 5, and/or onto the footboard 9 without departing from the scope of the invention.

The control unit 6 measures vertical angle of the unicycle, calculates the speed of the motor to put the unicycle back in balance and then sends the appropriate settings to the motor 2.

To this goal, the unicycle includes two accelerometers 13, positioned into footboards 9, the axis of the first accelerometer 13 is meeting the sagital plane to measure the rotation around the vertical axis and to regulate the fore-aft balance and the axis of the second accelerometer is meeting the front plane, i.e. is perpendicular to the axis of the first accelerometer, to measure the leaning, i.e. the rotation around the horizontal axis, and to regulate and/or switch the gyrostat, the motor 2, etc...

Preferably, the unicycle includes a third accelerometer 13 to provide more accurate measures.

Nevertheless, the unicycle can include only one accelerometer, corresponding to the said first accelerometer 13, without departing from the scope of the invention.

Said accelerometers 13 are connected to the microcontroller of the control unit 6.

If the unicycle is leaned forwards, the gyroscopic sensor of the control unit 6 detected the lean and said control unit 6 accelerates the speed of the motor 2 to put the unicycle back in balance. If the unicycle is leaned back, the speed of the motor 2 is decelerated. The gyroscopic sensor of the control unit 6 is positioned in such a manner that its measuring axis is parallel to the wheel's axis.

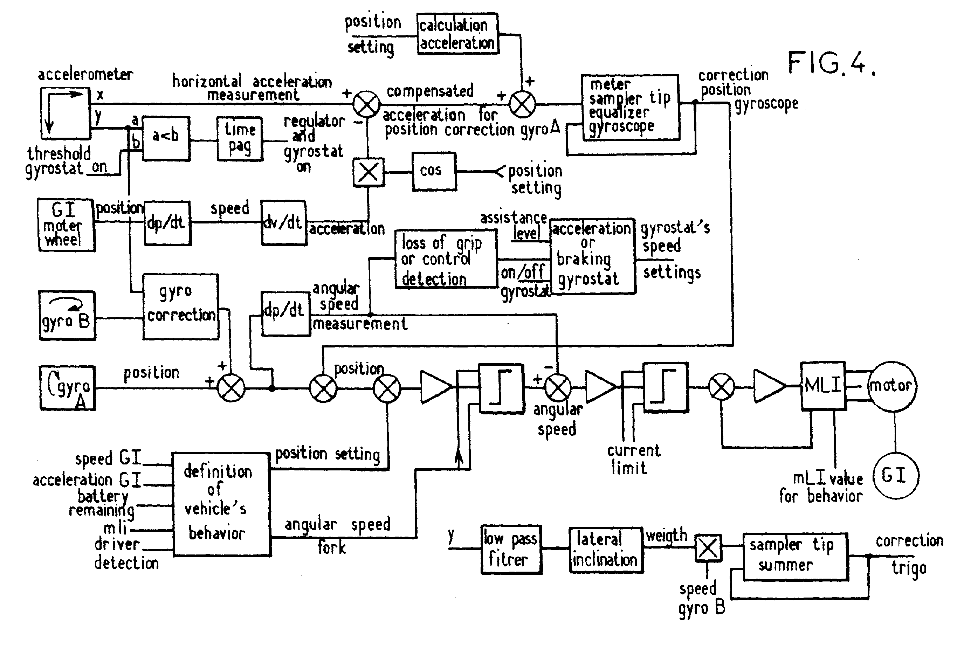

Referring to figure 4, the microcontroller of the control unit 6 derives the speed and the acceleration from the position's data given by the position sensor of the motor 2. Said acceleration data is then used to determine a position setting and combined with the horizontal acceleration measured by the first, and optionally by the third, accelerometer 13 to determine a corrected acceleration useful to compensate the position of the gyroscopic sensor as it will be described hereinafter.

The acceleration's measure provided by the second accelerometer 13 is compared with a determined threshold to switch the gyrostat 16. In this way, when the acceleration measured is less than the determined threshold, the gyrostat 16 is switch off with a determined time lag and when the acceleration measured is greater than the determined threshold, the gyrostat 16 is switch on with a determined time lag.

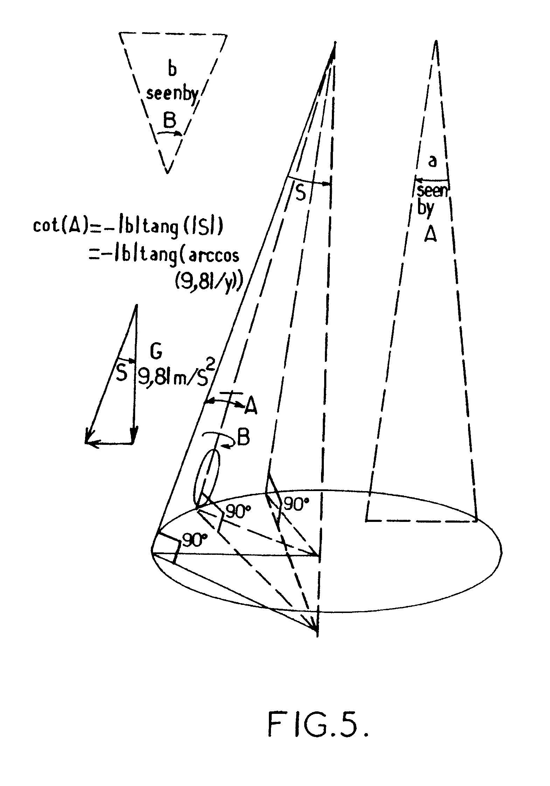

Moreover, the acceleration's measure provided by the second accelerometer is used to determine a compensated gyroscopic measure. Referring to figure 5, considering the angle a viewed by the first gyroscopic sensor called A and the angle b viewed by the second gyroscopic sensor called B, the angle a can be expressed in function of b and the angle s deducted from the second accelerometer, according to the following equation:

$$cor(A) = -|b| \tan g(|s|) = -|b| \tan g\left( \arccos\left( \frac{9,81}{Y} \right) \right)$$

Wherein Y is the acceleration measured by the second accelerometer and 9,81 is the gravity acceleration expressed in $m.S^{-2}$.

Then, the measure of the first gyroscopic sensor A can be compensated by the measure of the second gyroscopic sensor B.

This compensated measure of the gyroscopic sensor is then used in combination with the position setting, the angular velocity of the fork 3 to determine power settings of the motor to ensure the balance of the unicycle. Said power settings include a torque setting of the motor 2. Advantageously, it further includes a position correction which consists in a limitation by a speed setting. Said speed setting consists in predetermined settings depending of the use and/or the user level, including for example three modes or three sensitivities: easy, medium and expert.

Preferably, the leaning of the fork 3 is comprised between ±1° and +5° when an acceleration or a deceleration, derived from the speed measurement, is detected.

The microcontroller of the control unit 6 regulates the position of the fork 3 by a first regulation loop called position loop from measurement of the accelerometers 13. The speed measurement of the motor 2 of the wheel 1 is derived to determine the linear acceleration. Said linear acceleration is then used to adjust the position's measurement of sensors. The position's setting of the fork 3 is determined in function of the stored charge of batteries versus the speed of the motor 2 in such a way that the fork 3 is slowly tilted when the speed is maximum. Accessorily, the position's setting of the fork is determined in a same way for reverse. In the same way, the position's setting of the fork 3 is determined to slowly tilt the fork 3 frontward when the reverse speed is too high.

When the first loop is executed, the microcontroller gives an angular velocity setting used during the second loop. Said second loop determines the setting for the regulation of the motor 2 of the wheel in normal use. Then, the second loop uses the angular velocity limitation setting and the angular velocity of the fork 3, said angular velocity of the fork 3 being given by the gyroscopic sensor of the control unit 6, to determine the setting for the motor 2 in normal use.

The microcontroller can also include correction means of settings in function of the user's weight. For instance, the more the user's weight is high, the merrier the speed of the gyrostat is high.

Accessorily, the microcontroller includes filters such Kalman filters for example to treat the signal of the gyroscopic sensors.

It should be noted that the microcontroller of the control unit includes 8 analog inputs and/or serial bus input connected to sensors (gyroscopic sensors and/or accelerometers) and outputs connected to transistors of the variable speed drive of the motor 2.

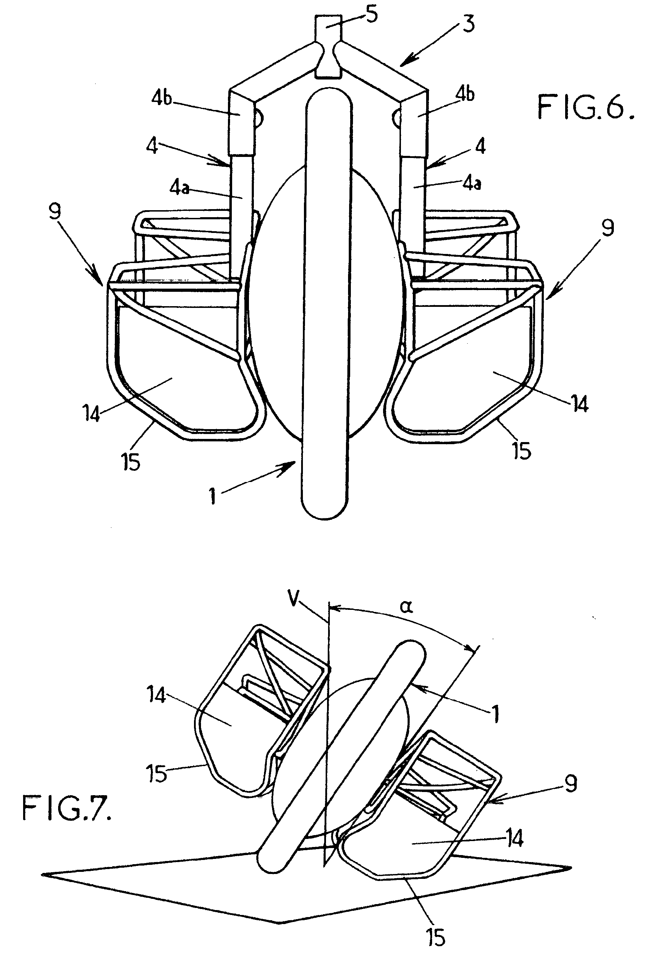

Moreover, referring to figures 6 and 7, each footboard 9 comprises a tubular frame having a general parallelepipedic shape receiving at least one battery 14 connected to the electric motor 2 driving the wheel 1. The inferior external angle of tubular frame of each footboard 9 is beveled to form a bearing surface 15 maintaining the unicycle according to a determined angle α when said unicycle is parked.

It should be noted that each footboard 9 can be obtained in one piece, in fibers material or in a thermoplastic for example, or in an assembly of bounded or welded sheet without departing from the scope of the invention.

Incidentally, each fork legs 4 and/or the fork shaft 5 comprise a shock absorber, not shown on figures.

Moreover, referring to figure 6, each fork legs 4 includes two parts 4a,4b which are clamped together by any appropriate means well known by the man skilled in the art. Such construction of the fork legs 4. Such construction in two parts of leg's fork makes easier the replacement and/or the maintenance and/or the repair of the tire.

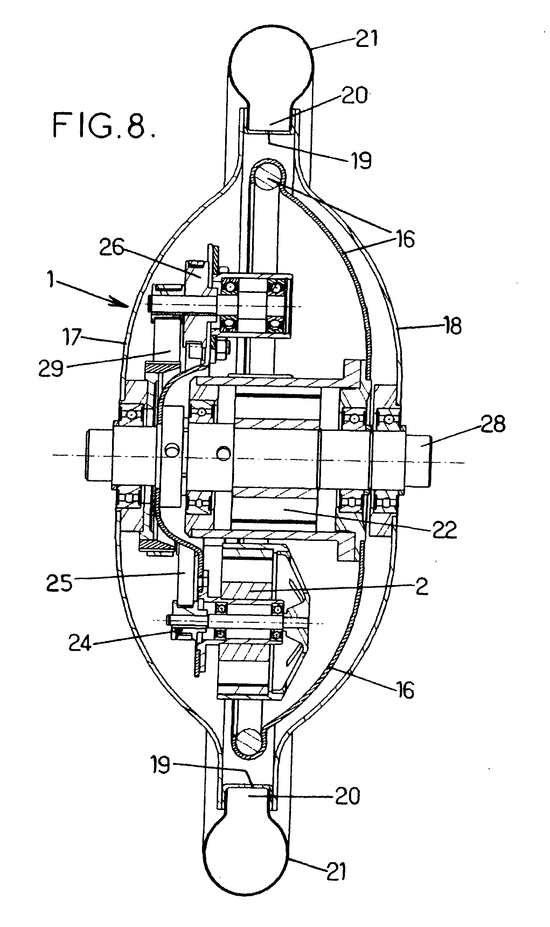

Referring to figure 8, the motor 2 is positioned into the wheel 1 and said wheel 1 comprises at least one gyrostat 16 rotating at a higher speed than the wheel 1 and in the same direction of the wheel 1 wherein the axis of rotation of the gyrostat 16 is meeting the axis of rotation of the wheel 1. Said gyrostat 16, and more precisely its gyroscopic effect, provides lateral stability of the unicycle and also serves as a steering means. Because the driver needs only to throw its weight on left or right to move the unicycle on a curved left or right path without falling. It is interesting to observe that the greater the driver throw its weight, the shaper the curve is. Alternatively, the driver can make a lateral hip bump on left or right to move the unicycle on a curved right or left path without falling. Obviously, the driver can make a plurality of little lateral hip bumps to steer the unicycle.

Said wheel 1 comprises two saucer-shaped wall members 17 and 18 secured together by an annular element 19 to form an annular groove 20 receiving a tire 21, the motor 2 driving the wheel 1 and the gyrostat 16 extending into the two-saucer shaped wall 17,18.

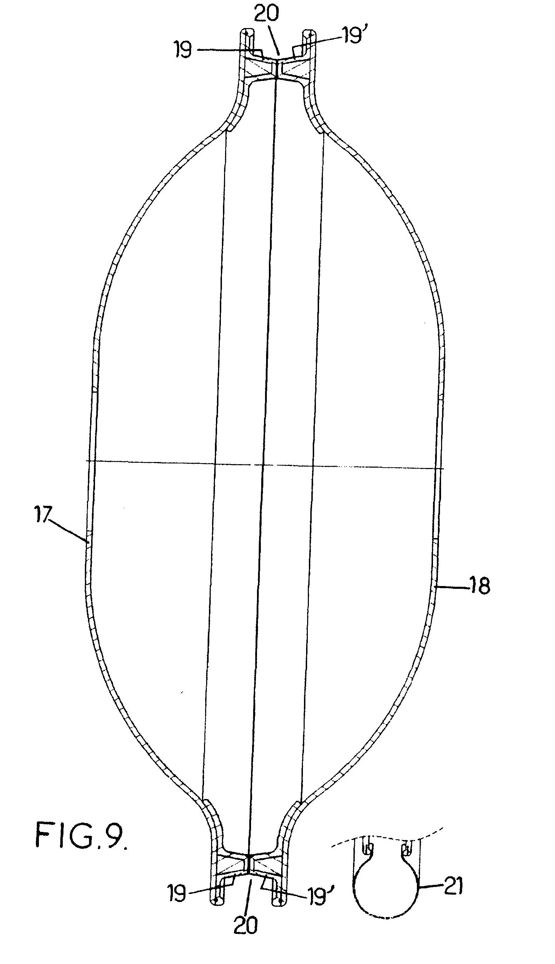

In another embodiment, referring to figure 9, each saucer-shaped wall members 17 and 18 comprises an annular element 19 and 19' which form an annular groove 20 receiving the tire 21 when said saucer-shaped wall members 17,18 are secured together by any appropriate means such as screws, not shown on figure 9.

The gyrostat 16 is driven by a second motor 22 at a speed comprised between 1500 et 5000 rpm in such a way that its kinetic energy is comprised between 1500 et 3500 Joules.

It should be obvious that the gyrostat 16 can comprise a plurality of disc shape element or can be substituted by any element producing a gyroscopic force meeting the rotation axis of the wheel 1.

Moreover, the gyrostat can extend into the two-saucer shaped wall 17,18 or outside said two-saucer shaped wall 17,18, into the control unit 6 for example, without departing from the scope of the invention.

Furthermore, the gyrostat 16 can be driven by the motor 2 driving the wheel 1 without departing from the scope of the invention.

At least, the position of the motor 2 into the two-saucer shaped wall 17,18 provides a low gravity center furthering the equilibrium of the unicycle and an easy driving of said unicycle ; Nevertheless, the motor 2 could be positioned outside the two-saucer shaped wall 17,18, between the wheel 1 and the saddle 7, or into footboards 9 for example, without departing from the scope of the invention.

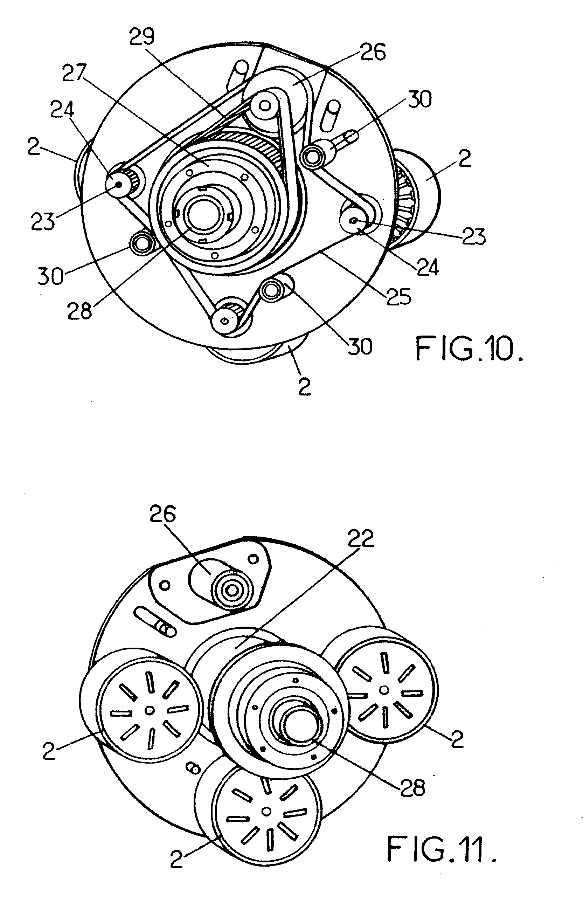

In another embodiment of the invention, referring to figures 10 to 13, it comprises three motors 2, the driving shaft 23 of each motor 2 includes a pinion 24 driving a first belt 25 cooperating with a reduction pinion 26 driving a driven gear 27 fixed to the shaft 28 of the wheel 1. The driven gear is driven by a second belt 29 cooperating with the reduction pinion 26. The first belt 25 is strained by a plurality of pressure rollers 30.

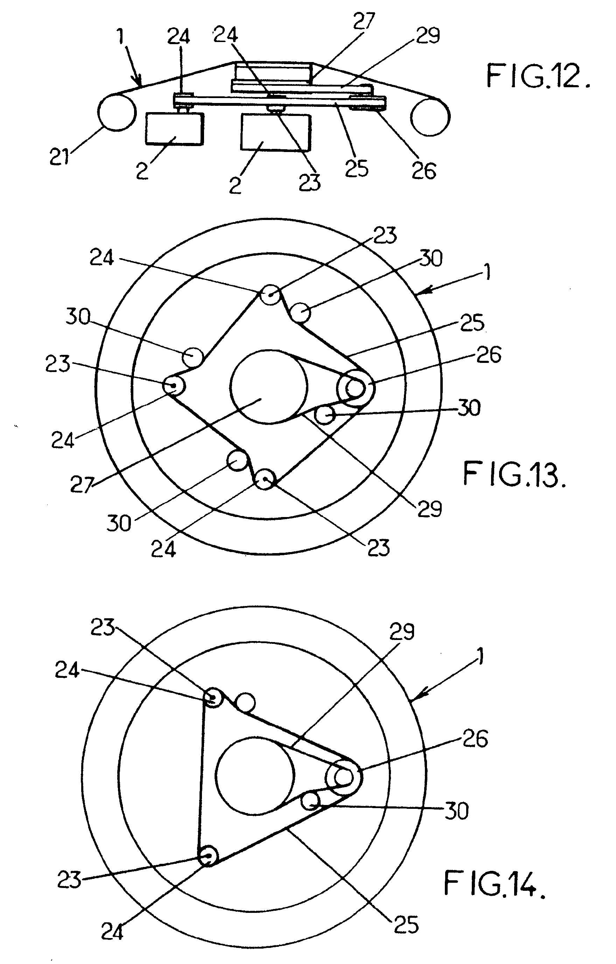

Figure 14 depicted another embodiment comprising two motors 2 wherein the driving shaft 23 of each motor 2 includes a pinion 24 driving a first belt 25 cooperating with a reduction pinion 26 driving a driven gear 27 fixed to the shaft 28 of the wheel 1.

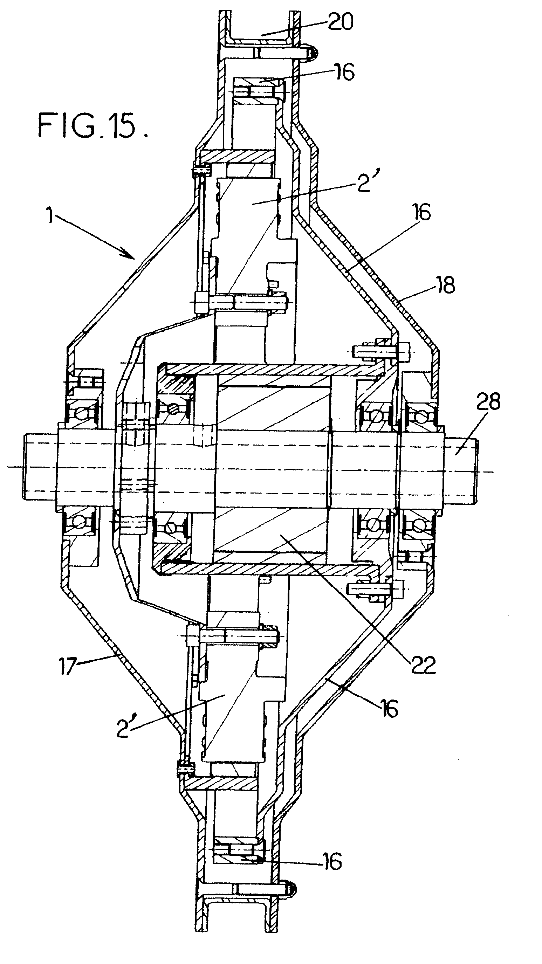

In another embodiment of the invention, referring to figure 15, the wheel 1 includes as preceding a motor 2 and one gyrostat 16. Said wheel 1 comprises two saucer-shaped wall members 17 and 18 secured together by an annular element 19 to form an annular groove 20 receiving a tire 21, the motor 2 driving the wheel 1 and the gyrostat 16 extending into the two-saucer shaped wall 17,18.

This embodiment differs from the precedent by the fact that the motor 2 is substituted by an annular motor 2'.

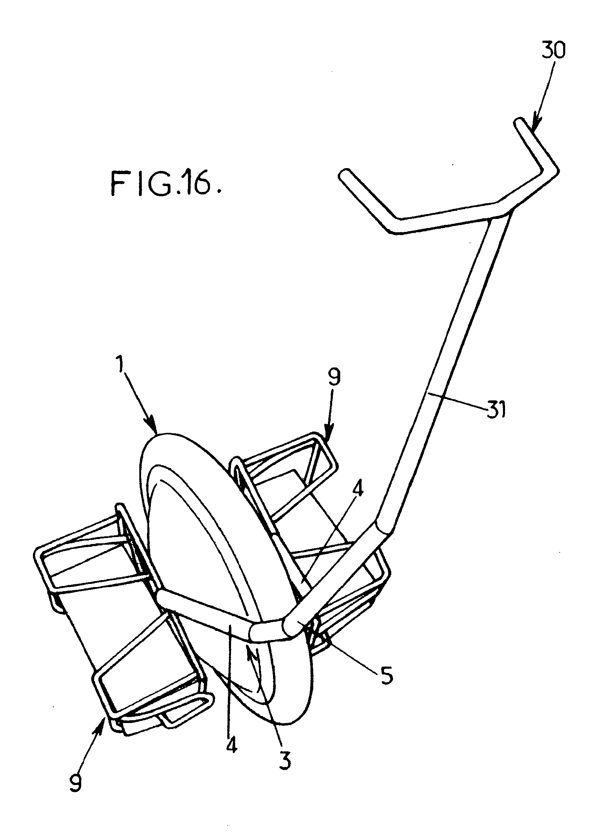

In yet another embodiment of the invention, referring to figure 16, the powered one wheel vehicle according to the invention includes in the same way as preceding a wheel 1 driven by at least one motor 2, not shown on figure 16, and mounted on a fork 3 including two fork legs 4 and one fork shaft 5, a control unit 6, not shown on figure 16, arranged to automatically maintain the fore-aft balance of the unicycle by piloting the motor 2, and footboards 9 fixed to the fork legs 4 of the fork 3.

This embodiment differs from the precedent by the fact that the saddle 7 is substituted by a handlebar 30 fixed on a stem 31 clamped into the fork shaft 5 by any clamping device well known by the man skilled in the art such as a quick clamp for example.

For steering the unicycle, the driver has just to throw its weight on left or right relative to the stem 31 to move the unicycle on a curved left or right path without falling. The greater the driver throws its weight, the shaper the curve is.

It is obvious that the electric motor 2 and batteries 14 can be substituted by any kind of motor and appropriate source of energy without departing from the scope of the invention.

Any reference sign in the following claims should not be construed as limiting the claim. It will be obvious that the use of the verb "to comprise" and its conjugations does not exclude the presence of any other elements besides those defined in any claim. The word "a" or "an" preceding an element does not exclude the presence of a plurality of such elements.

**Claims**

1. A powered one wheel vehicle including a wheel (1) driven by at least one motor (2) and mounted on a fork (3) including two fork legs (4) and one fork shaft (5), a control unit (6) arranged to automatically maintain the fore-aft balance of the powered one wheel vehicle by piloting the motor (2), and footboards (9) fixed to the fork legs (4) of the fork (3), **characterized in that** it comprises at least one balanced weight called gyrostat (16) rotating at a higher speed than the wheel (1) and in the same direction of the wheel (8), the speed of rotation of the gyrostat (16) being a function of the rider's weight and/or the desired sensitivity to provide a sufficient gyroscopic precession that allows a steering of the wheel (1) by a leaning's variation.

2. Powered one wheel vehicle according to claim 1, **characterized in that** the axis of rotation of the gyrostat (16) is parallel to the axis of rotation of the wheel (1).

3. Powered one wheel vehicle according to claim 1 and 2, **characterized in that** the axis of rotation of the gyrostat (16) is meeting the axis of rotation of the wheel (1).

4. Powered one wheel vehicle according to any claim 1 to 3, **characterized in that** the wheel (1) comprises two saucer-shaped wall members (17, 18) secured together to form an annular groove (20) receiving a tire (21), the motor (2) driving the wheel (1) and the gyrostat (16) extending into the two-saucer shaped wall members (17, 18).

5. Powered one wheel vehicle according to any claim 1 to 4, **characterized in that** the gyrostat (16) is driven by the motor (2) driving the wheel (1).

6. Powered one wheel vehicle according to claims 1 to 4, **characterized in that** the gyrostat (16) is driven by a second motor (22).

7. Powered one wheel 1 vehicle according to any claim 1 to 6, **characterized in that** each fork leg (4) comprises two part (4a, 4b) clamped together.

8. Powered one wheel vehicle according to any claim 1 to 7, **characterized in that** it comprises at least two motor (2), the driving shaft (23) of each motor (2) includes a pinion (24) driving a first belt (25) cooperating with a reduction pinion (26) driving a driven gear (27) fixed to the shaft (28) of the wheel (1).

9. Powered one wheel vehicle according to any claim 1 to 7, **characterized in that** the motor (2) is an annular motor.

10. Powered one wheel vehicle according to any claim 1 to 9, **characterized in that** the control unit (6) comprises at least one gyroscopic sensor measuring the angular velocity of the fork (3), the position's regulation and the speed's regulation of the fork (3), a variable speed drive of the motor (2) and a control circuitry of accessories and of the motor (2) of the wheel (1).

11. Powered one wheel vehicle according to any claim 1 to 9, **characterized in that** it comprises at least one gyroscopic sensor connected to the control unit (6) and positioned into the footboards (9).

12. Powered one wheel vehicle according to any claim 1 to 9, **characterized in that** each footboard (9) has a general parallelepipedic shape receiving at least one battery (14) connected to the electric motor (2) driving the wheel (1) and/or the electric motor (22) driving the gyrostat (16).

13. Powered one wheel vehicle according to claim 10, **characterized in that** the inferior external angle of each footboard (9) is beveled to form a bearing surface (15) that maintains the unicycle according a determined angle ($\alpha$) when said powered one wheel vehicle is parked.

14. Powered one wheel vehicle according to any claim 1 to 13, **characterized in that** it further comprises a handlebar (30) fixed on a stem (31) clamped into the fork shaft (5).

**Patentansprüche**

1. Motorbetriebenes Einradfahrzeug, enthaltend ein Rad (1), welches von mindestens einem Motor (2) angetrieben ist und an einer Gabel (3) angebracht ist, die zwei Gabelschenkel (4) und eine Gabelachse (5) aufweist, eine Steuereinheit (6), die dafür ausgelegt ist, das Vorwärts-Rückwärts-Gleichgewicht des motorbetriebenen Einradfahrzeugs durch Steuerung des Motors (2) automatisch aufrechtzuerhalten, und Fußstützen (9), die an den Gabelschenkeln (4) der Gabel (3) befestigt sind, **dadurch gekennzeichnet, dass** es mindestens ein als Stabilisierungskreisel (16) bezeichnetes Ausgleichsgewicht aufweist, welches mit einer höheren Geschwindigkeit als das Rad (1) und in derselben Richtung wie das Rad (18) dreht, wobei die Drehzahl des Stabilisierungskreisels (16) eine Funktion des Gewichts des Fahrers und/oder der gewünschten Empfindlichkeit ist, um eine ausreichende gyroskopische Präzession bereitzustellen, die das Lenken des Fahrzeugs (1) durch Variation der Neigung erlaubt.

2. Motorbetriebenes Einradfahrzeug nach Anspruch 1, **dadurch gekennzeichnet, dass** die Drehachse des Stabilisierungskreisels (16) parallel zur Drehachse des Rades (1) ist.

3. Motorbetriebenes Einradfahrzeug nach Anspruch 1 und 2, **dadurch gekennzeichnet, dass** die Drehachse des Stabilisierungskreisels (16) die Drehachse des Rades (1) trifft.

4. Motorbetriebenes Einradfahrzeug nach einem der Ansprüche 1 bis 3, **dadurch gekennzeichnet, dass** das Rad (1) zwei schalenförmige Wandelemente (17, 18) aufweist, die aneinander befestigt sind, so dass sie eine ringförmige Nut (20) bilden, die einen Reifen (21) aufnimmt, der Motor (2) das Rad (1) antreibt und der Stabilisierungskreisel (16) sich in die beiden schalenförmigen Wandelemente (17, 18) erstreckt.

5. Motorbetriebenes Einradfahrzeug nach einem der Ansprüche 1 bis 4, **dadurch gekennzeichnet, dass** der Stabilisierungskreisel (16) von dem Motor (2) angetrieben wird, der das Rad (1) antreibt.

6. Motorbetriebenes Einradfahrzeug nach einem der Ansprüche 1 bis 4, **dadurch gekennzeichnet, dass** der Stabilisierungskreisel (16) durch einen zweiten Motor (22) angetrieben wird.

7. Motorbetriebenes Einradfahrzeug nach einem der Ansprüche 1 bis 6, **dadurch gekennzeichnet, dass** jeder Gabelschenkel (4) zwei aneinandergeklemmte Teile (4a, 4b) umfasst.

8. Motorbetriebenes Einradfahrzeug nach einem der Ansprüche 1 bis 7, **dadurch gekennzeichnet, dass** es mindestens zwei Motoren (2) aufweist, wobei die Antriebswelle (23) jedes Motors (2) ein Ritzel (24) aufweist, welches einen ersten Riemen (25) antreibt, der mit einem Untersetzungsritzel (26) zusammenwirkend ein an der Welle (28) des Rades (1) befestigtes angetriebenes Zahnrad (27) antreibt.

9. Motorbetriebenes Einradfahrzeug nach einem der Ansprüche 1 bis 7, **dadurch gekennzeichnet, dass** der Motor (2) ein Ringmotor ist.

10. Motorbetriebenes Einradfahrzeug nach einem der Ansprüche 1 bis 9, **dadurch gekennzeichnet, dass** die Steuereinheit (6) mindestens einen Gyroskopsensor, der die Winkelgeschwindigkeit der Gabel (3) misst, die Positionsregelung und die Geschwindigkeitsregelung der Gabel (3), einen Antrieb des Motors (2) mit variabler Drehzahl und eine Steuerschaltung von Zubehörteilen und des Motors (2) des Rades (1) aufweist.

11. Motorbetriebenes Einradfahrzeug nach einem der Ansprüche 1 bis 9, **dadurch gekennzeichnet, dass** es mindestens einen Gyroskopsensor aufweist, der mit der Steuereinheit (6) verbunden ist und in den Fußstützen (9) angeordnet ist.

12. Motorbetriebenes Einradfahrzeug nach einem der Ansprüche 1 bis 9, **dadurch gekennzeichnet, dass** jede Fußstütze (9) eine allgemein quaderförmigen Form hat, die mindestens eine Batterie (14) aufnimmt, die mit dem das Rad (1) antreibenden Elektromotor (2) und/oder dem den Stabilisierungskreisel (16) antreibenden Elektromotor (22) verbunden ist.

13. Motorbetriebenes Einradfahrzeug nach Anspruch 10, **dadurch gekennzeichnet, dass** der untere Außenwinkel jeder Fußstütze (9) so abgeschrägt ist, dass eine Auflagefläche (15) gebildet ist, welche das Einrad in einem vorbestimmten Winkel ($\alpha$) hält, wenn das motorbetriebene Einradfahrzeug geparkt ist.

14. Motorbetriebenes Einradfahrzeug nach einem der Ansprüche 1 bis 13, **dadurch gekennzeichnet, dass** es ferner eine an einem Schaft (31), der in die Gabelachse (5) geklemmt wird, befestigte Lenkstange (30) aufweist.

**Revendications**

1. Véhicule motorisé à une roue, comprenant une roue (1) entraînée par au moins un moteur (2) et montée sur une fourche (3) comprenant deux branches de fourche (4) et un arbre de fourche (5), une unité de commande (6) agencée de manière à maintenir automatiquement l'équilibre longitudinal du véhicule motorisé à une roue en pilotant le moteur (2), et des repose-pieds (9) fixés aux branches de fourche (4) de la fourche (3), **caractérisé en ce qu'**il comprend au moins un poids équilibré appelé gyrostat (16) qui tourne à une vitesse plus élevée que la roue (1) et dans la même direction que la roue (1), la vitesse de rotation du gyrostat (16) étant une fonction du poids de l'utilisateur et/ou de la sensibilité souhaitée afin de fournir une précession gyroscopique suffisante qui permet de diriger la roue (1) par une variation de l'inclinaison.

2. Véhicule motorisé à une roue selon la revendication 1, **caractérisé en ce que** l'axe de rotation du gyrostat (16) est parallèle à l'axe de rotation de la roue (1).

3. Véhicule motorisé à une roue selon la revendication 1 ou 2, **caractérisé en ce que** l'axe de rotation du gyrostat (16) rencontre l'axe de rotation de la roue (1).

4. Véhicule motorisé à une roue selon l'une quelconque des revendications 1 à 3, **caractérisé en ce que** la roue (1) comprend deux éléments de paroi en forme de soucoupe (17, 18) qui sont fixés l'un à l'autre de manière à former une rainure annulaire (20) recevant un pneumatique (21), le moteur (2) entraînant la roue (1) et le gyrostat (16) s'étendant dans les deux éléments de paroi en forme de soucoupe (17, 18).

5. Véhicule motorisé à une roue selon l'une quelconque des revendications 1 à 4, **caractérisé en ce que** le gyrostat (16) est entraîné par le moteur (2) qui entraîne la roue (1).

6. Véhicule motorisé à une roue selon l'une quelconque des revendications 1 à 4, **caractérisé en ce que** le gyrostat (16) est entraîné par un deuxième moteur (22).

7. Véhicule motorisé à une roue selon l'une quelconque des revendications 1 à 6, **caractérisé en ce que** chaque branche de fourche (4) comprend deux parties (4a, 4b) fixées ensemble.

8. Véhicule motorisé à une roue selon l'une quelconque des revendications 1 à 7, **caractérisé en ce qu'**il comprend au moins deux moteurs (2), l'arbre d'entraînement (23) de chaque moteur (2) comprenant un pignon (24) qui entraîne une première courroie (25) coopérant avec un pignon de réduction (26) qui entraîne un engrenage entraîné (27) fixé à l'arbre (28) de la roue (1).

9. Véhicule motorisé à une roue selon l'une quelconque des revendications 1 à 7, **caractérisé en ce que** le moteur (2) est un moteur annulaire.

10. Véhicule motorisé à une roue selon l'une quelconque des revendications 1 à 9, **caractérisé en ce que** l'unité de commande (6) comprend au moins un capteur gyroscopique qui mesure la vitesse angulaire de la fourche (3), la régulation de la position et la régulation de la vitesse de la fourche (3), une commande de vitesse variable du moteur (2) et un circuit de commande d'accessoires et du moteur (2) de la roue (1).

11. Véhicule motorisé à une roue selon l'une quelconque des revendications 1 à 9, **caractérisé en ce qu'**il comprend au moins un capteur gyroscopique qui est connecté à l'unité de commande (6) et qui est positionné dans les repose-pieds (9).

12. Véhicule motorisé à une roue selon l'une quelconque des revendications 1 à 9, **caractérisé en ce que** chaque repose-pied (9) présente une forme générale parallélépipédique recevant au moins une batterie (14) connectée au moteur électrique (2) qui entraîne la roue (1) et/ou au moteur électrique (22) qui entraîne le gyrostat (16).

13. Véhicule motorisé à une roue selon la revendication 10, **caractérisé en ce que** l'angle externe inférieur de chaque repose-pied (9) est biseauté de manière à former une surface d'appui (15) qui maintient le monocycle selon un

angle déterminé ($\alpha$) lorsque ledit véhicule motorisé à une roue est garé.

**14.** Véhicule motorisé à une roue selon l'une quelconque des revendications 1 à 13, **caractérisé en ce qu'**il comprend en outre un guidon (30) qui est fixé sur une tige (31) fixée dans l'arbre de fourche (5).

FIG.1.

FIG.2.

FIG.3.

FIG.4.

EP 2 409 905 B1

$$cot(A) = -|b| \, tang(|S|)$$
$$= -|b| \, tang(arccos$$
$$(9,81/y))$$

FIG.5.

FIG.6.

FIG.7.

FIG.8.

...

FIG.9.

FIG.10.

FIG.11.

FIG.12.

FIG.13.

FIG.14.

FIG.15.

FIG.16.

## REFERENCES CITED IN THE DESCRIPTION

**Patent documents cited in the description**

- US 3399742 A
- US 20070158117 A
- WO 2009120157 A